# EUROPÄISCHE PATENTSCHRIFT

(11) **EP 2 518 344 B1**
(45) Veröffentlichungstag und Bekanntmachung des Hinweises auf die Patenterteilung: **28.12.2016**
(21) Anmeldenummer: 12165000.6
(22) Anmeldetag: 20.04.2012
(51) Int. Cl.: F16C 29/06, F16C 33/66, F16N 11/02

(54) **Schmiermittelzufuhr für eine Linearführung**
Lubricant supply for a linear bearing
Introduction de lubrifiant pour un guidage linéaire

(30) Priorität: 29.04.2011 DE 102011017758
(43) Veröffentlichungstag der Anmeldung: 31.10.2012
(73) Patentinhaber: Aktiebolaget SKF, 415 50 Göteborg (SE)
(72) Erfinder: Edelmann, Ludwig, 97717 Sulzthal (DE); Hofmann, Joachim, 97456 Dittelbrunn (DE); Jeschka, Erwin, 97711 Maßbach (DE); Kemmer, Martin, 97440 Werneck (DE); Velde, Henryk, 97440 Werneck (DE)
(74) Vertreter: Schonecke, Mitja

(56) Entgegenhaltungen:
- DE-A1- 19 647 939
- DE-A1- 19 921 872
- DE-A1-102009 016 163
- DE-B3-102006 003 849

## Beschreibung

Die Erfindung betrifft eine Vorrichtung und eine Verfahren zur Schmiermittelzufuhr für Linearführungen.

Unter einer Linearführung versteht man im Allgemeinen eine Anordnung, die eine möglichst reibungsfreie Translation einer oder mehrerer beweglicher Baugruppen einer Maschine ermöglicht und dabei gleichzeitig eine Einhaltung der Bewegungsrichtung in Form einer linearen Bahn garantiert. Man kann Linearführungen nach ihrer Lagerung in Gleitführungen und Wälzführungen unterteilen. Wälzführungen beruhen auf dem Prinzip der Umwälzung von Wälzkörpern zwischen zwei bewegten Führungselementen. Als Wälzkörper dienen wie beim Wälzlager beispielsweise Kugeln, Rollen, Nadeln oder andere Wälzkörper. Zu den Wälzführungen gehören u. a Profilschienenführungen oder auch Linearführungen.

Bei Profilschienenführungen umgreifen sogenannte Führungs- oder Laufwagen mit einem im Wesentlichen U-förmigen Querschnitt eine Führungs- bzw. Profilschiene. Der Führungswagen ist dabei auf der Führungsschiene wälzgelagert. In anderen Worten ausgedrückt bildet der Führungswagen einen äußeren Führungsteil der Linearführung und die Führungsschiene einen inneren Führungsteil der Linearführung, wobei sich inneres und äußeres Führungsteil gegenseitig über Wälzkörper abstützen.

Wie erwähnt, kommen zur Führung des Wagens bzw. Schlittens neben Gleitführungen in der Regel Wälzführungen zum Einsatz, welche Reibungswiderstände stark herabsetzen können. Zur weiteren Absenkung des Reibungswiderstandes und zur Verschleißminderung erfolgt eine Schmierung, wozu sich auf den Laufflächen der Profilschiene als auch den Wälzkörpern ein dünner Schmier- bzw. Fettfilm befindet. Konstruktiv wird zwischen linearer Lager- oder linearer Führungseinrichtungen mit geschlossenem Wälzkörperumlauf für unbegrenzte Längsbewegungen entlang der Profilschiene, sowie Schienenführungen ohne Wälzkörperrückführung für begrenzte Verfahr- bzw. Verschiebewege unterschieden. Zur Schmierung ist auch ein entsprechendes Schmiermittelreservoir am Wagen vorgesehen. Dieses sollte gut abgedichtet sein, um einen stets gegebenen Schmierstoffaustritt aus der Linearführung möglichst gering zu halten. Hierzu weist in der Regel der Wagen an einer, jedoch üblicherweise an beiden Stirnseiten, die über jeweilige Kopfstücke bzw. Endplatten abgeschlossen sind, einen lösbar angeordneten (Front-) Abstreifer auf, der die Stirnseite abschließt und über eine Dichtung abdichtet.

Der Schmierstoff bzw. die Schmierung hat dabei einen wesentlichen Einfluss auf eine nominelle Lebensdauer der Wagenlagerung, also des Linearlagers. Solche Linearlagerungen sind grundlegende Maschinenelemente und meist nur schwer zugänglich und/oder schlecht austauschbar. Die Linearführung wird üblicherweise nach bestimmten Laufzeiten oder -leistungen nachgeschmiert, um einen Schmierstoffverlust auszugleichen.

Nun ist es oft so, dass diese Nachschmierung mitunter zu spät erfolgt, d.h. dann, wenn bereits zu viel Schmierstoff ausgetragen wurde und ein Bereich zwischen den Laufflächen und den Wälzkörpern nicht mehr geschmiert wird. Andererseits kann es auch passieren, dass die Nachschmierung zu einem Zeitpunkt erfolgt, zu dem ein Nachfüllen des Schmierstoffs überhaupt noch nicht erforderlich ist.

Mit herkömmlichen Nachschmierkonzepten sind weiterhin meist bedeutende Stillstandzeiten der Linearführung verbunden, was sich nachteilig auf einen Maschinendurchsatz auswirken kann und letztendlich Betriebskosten erhöht.

Die DE 196 47 939 A1 beschreibt ein Linearlagerelement, dessen Lagerbereich als Wälzkörperumlauf ausgebildet ist, der sich innerhalb eines Tragkörpers und zweier Umlenkkörper befindet, und das an der Lauffläche einer Führungsschiene gelagert und an mindestens einer seiner beiden Stirnseiten mit einem Abstreifer versehen ist, welcher zum Zurückhalten von Schmierstoff in dem Lagerelement mit einem Endbereich auf der Lauffläche aufliegt, wobei an oder in dem Lagerelement wenigstens ein mit seiner Eintrittsseite an einer äußeren Zuführleitung angeschlossenes und an seiner Austrittsseite mit dem Lagerbereich verbundenes Zuführgerät für Schmierstoff angeordnet ist, welches eine mit der äußeren Zuführleitung verbundene Dosierkammer und in diese einmündende Verteilerkanäle enthält und an einer Stirnseite des Lagerelementes angeordnet ist. Die Dosierkammer und die Verteilerkanäle des Zuführgerätes sind jeweils unmittelbar in den zugehörigen Umlenkkörper eingeformt.

Die Aufgabe der vorliegenden Erfindung besteht somit darin, eine gegenüber dem Stand der Technik verbesserte oder zumindest alternative Nachschmierung bzw. Schmiermittelzufuhr für eine Linearführung bereitzustellen.

Zur verbesserten Nachschmierung sehen Ausführungsbeispiele der vorliegenden Erfindung ein Konzept zum Zuführen von Schmiermittel für einen Führungswagen einer Linearführung vor, wobei ein Schmiermittelreservoir zum Aufnehmen eines Schmiermittels für den Führungswagen bereitgestellt wird. Dieses Schmiermittelreservoir wird mit dem Führungswagen gekoppelt und eine Zufuhr von Schmiermittel aus dem Schmiermittelreservoir in den Führungswagen wird mittels einer dafür vorgesehenen Schmiermitteldosierungseinrichtung manuell oder automatisch dosiert.

Ausführungsbeispiele stellen dazu eine Schmiermittelzufuhrvorrichtung für einen Führungswagen einer Linearführung bereit, mit einem Schmiermittelreservoir zum Aufnehmen eines Schmiermittels für den Führungswagen, einer Kopplungseinrichtung zum Koppeln des Schmiermittelreservoirs mit dem Führungswagen, und einer Schmiermitteldosierungseinrichtung für eine dosierte Zufuhr von Schmiermittel aus dem Schmiermittelreservoir in den Führungswagen.

Das Schmiermittelreservoir ist derart mit dem Führungswagen gekoppelt, um gemeinsam mit dem Führungswagen eine translatorische Bewegung entlang einer Führungs- bzw. Profilschiene der Linearführung durchzuführen. Es kann sich bei der Schmiermittelzufuhrvorrichtung mit dem Schmiermittelreservoir also beispielsweise um einen mit dem Führungswagen gekoppelten sogenannten Nachschmieraufsatz handeln. Der Nachschmieraufsatz bzw. das Schmiermittelreservoir muss dabei nicht notwendigerweise selbstständig auf der Profilschiene wälzgelagert sein. Gemäß einem Ausführungsbeispiel kann er die Führungsschiene jedoch, ähnlich wie ein wälzgelagerter Führungswagen, U-förmig bzw. bügelartig umgreifen. Er kann damit also quasi einen äußeren Führungsteil der Schmiermittelzufuhrvorrichtung bilden.

Die Schmiermitteldosierungseinrichtung weist ein Stellglied, das beispielsweise eine Dosierungsschraube umfasst, zum Betätigen eines in dem Schmiermittelreservoirs geführten Kolbens auf, um mittels des Kolbens ein Schmiermittel für Wälzkörper des Führungswagens aus dem Schmiermittelreservoir in einen dafür vorgesehenen Schmierstoffbereich des Führungswagens zu drücken, sodass ein geeigneter Schmierfilm zwischen Laufflächen und Wälzkörpern ausgebildet werden kann.

Der in dem Schmiermittelreservoir geführte Kolben und das Stellglied bzw. die Dosierungsschraube sind über eine Zahnstange miteinander gekoppelt. Bei einem derartigen Ausführungsbeispiel kann das Stellglied bzw. die Dosierungsschraube weiterhin mit einem Zahnrad gekoppelt sein, welches in die Zahnstange eingreift, um bei einer Drehung der Dosierungsschraube die Zahnstange und damit auch den in dem Schmiermittelreservoir geführten Kolben zu bewegen, und somit Schmiermit tel aus dem Schmiermittelreservoir in Richtung Laufflächen und/oder Wälzkörper abzugeben.

Gemäß einem vorteilhaften Ausführungsbeispiel ist an der Schmiermittelzufuhrvorrichtung wenigstens eine Markierung vorgesehen, um einem Nutzer dieser Vorrichtung eine Zufuhr einer der Markierung entsprechenden und vorbestimmten Schmiermittelmenge, zum Beispiel zur Nachschmierung bzw. -fettung, anzuzeigen.

Gemäß anderen Ausführungsformen kann das Stellglied aber auch einen Motor, insbesondere einen Elektromotor aufweisen, welcher beispielsweise durch eine Sensoreinrichtung gesteuert bzw. geregelt wird. Die Sensoreinrichtung kann dabei ein direktes oder indirektes Maß für eine zwischen Wälzkörpern und Lauffläche vorhandene Schmiermittelmenge ermitteln, und basierend darauf ggf. den Motor der Dosierungseinrichtung betätigen, um den in dem Schmiermittelreservoir geführten Kolben zu bewegen, und somit Schmiermittel aus dem Schmiermittelreservoir in Richtung Laufflächen und/oder Wälzkörper abzugeben.

Bevorzugte Ausführungsbeispiele und Weiterbildungen der vorliegenden Erfindung sind Gegenstand der abhängigen Ansprüche und der nachfolgenden detaillierten Beschreibung.

Gemäß Ausführungsbeispielen der vorliegenden Erfindung kann einem herkömmlichen Führungs- bzw. Profilschienenwagen also eine Nachschmiereinheit mit einer Fett- bzw. Schmiermittelfüllung vormontiert werden. Durch Betätigen des Stellglieds bzw. der Dosierschraube kann beispielsweise mittels einer Zahnstange und einem Kolbensystem ein vorbestimmtes Fett- bzw. Schmiermittelvolumen von dem Schmiermittelreservoir der Nachschmiereinheit in den Profilschienenwagen gedrückt werden. Markierungen, die beispielsweise an der Zahnstange und/oder dem Gehäuse der Nachschmiereinheit vorgesehen sind, sind derart angebracht, dass die vorbestimmte Fettmenge entsprechend der Markierungen dosiert werden kann. Je nach Ausführungsform können so beispielsweise 3-5 Nachschmierintervalle ermöglicht werden, was regelmäßig für eine Lebensdauer eines Linearsystems ausreicht.

Ein Vorteil von Ausführungsbeispielen ergibt sich daraus, dass nun eine Linearführung nicht mehr umständlich mit Fettpresse und Schmiernippel nachgefettet werden muss. Durch Betätigen des Stellglieds, was im Fall einer Dosierschraube einem Drehen entspricht, kann beispielsweise mit einem einfachen Werkzeug, wie einem Inbus- oder einem Schraubendreher, erfolgen. Die den Markierungen entsprechenden Fett- bzw. Schmiermittelmengen können derart vordosiert werden, um Über- oder Unterfettungen der Linearführung vermeiden zu können. Auf diese Weise kann eine Lebensdauer der Linearführung besser abgesichert werden.

Des Weiteren können Verschmutzungen vermieden werden, die bei einem herkömmlichen Nachfetten mittels einer Fettpresse auftreten können. Dabei besteht nämlich die Gefahr, dass beispielsweise bei einem nicht exakten Ansetzen der Fettpresse ein Teil der Fettmenge daneben geht bzw. an Schmiernippel oder Umgebungsteilen hängen bleibt.

Weiterhin können in vorteilhafter Weise auch Fettverwechslungen vermieden werden, wie sie zum Beispiel in Anlagen mit verschiedenen Schmierstoffen herkömmlicherweise vorkommen können.

Ein weiterer Vorteil besteht darin, dass die Schmiermittelzufuhrvorrichtung, d.h. der Schmiermittelaufsatz, als Träger für zusätzliche Dichtungen genutzt werden kann.

Ausführungsbeispiele der vorliegenden Erfindung werden nachfolgend bezugnehmend auf die beiliegenden Figuren näher erläutert. Es zeigen:
- Fig. 1: eine Schmiermittelzufuhrvorrichtung für einen Führungswagen einer Linearführung, gemäß einem Ausführungsbeispiel der vorliegenden Erfindung;
- Fig. 2: eine detailliertere Ansicht der Schmiermittelzufuhrvorrichtung gemäß Fig. 1; und
- Fig. 3: eine Seitenansicht einer Schmiermittelzufuhrvorrichtung mit Dosierungsschraube und damit gekoppelter Zahnstange.

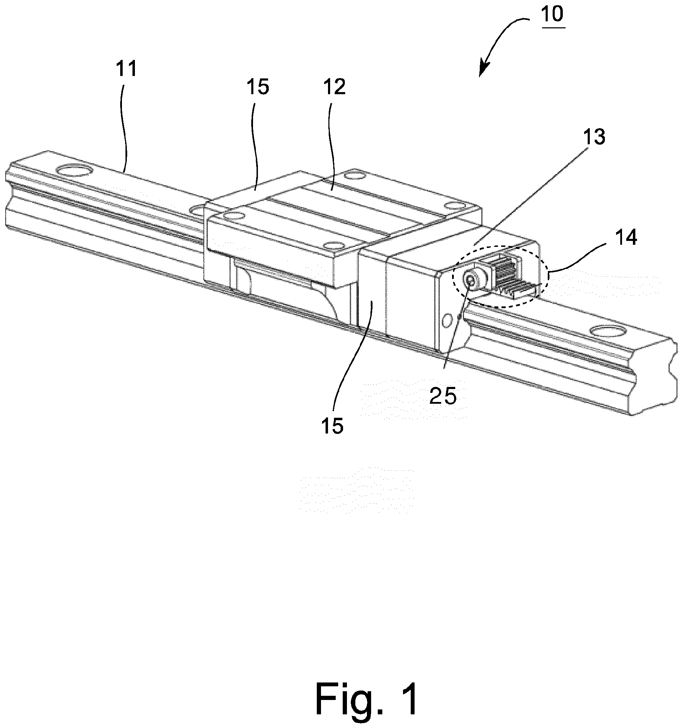

Fig. 1 zeigt eine Linearführung 10 mit einer Führungsschiene 11, einem Führungswagen 12 und einer Schmiermittelzufuhrvorrichtung 13 gemäß einem Ausführungsbeispiel der vorliegenden Erfindung.

Die Schmiermittelzufuhrvorrichtung 13 zur Zufuhr von Schmiermittel für den Führungswagen 12 bzw. für die Linearführung 10 weist ein (in Fig. 1 nicht explizit dargestelltes) Schmiermittelreservoir zum Aufnehmen des Schmiermittels für den Führungswagen 12 auf. Ferner ist die Schmiermittelzufuhrvorrichtung 13 mittels einer (in Fig. 1 ebenfalls nicht explizit gezeigten) Kopplungseinrichtung zum Koppeln des Schmiermittelreservoirs mit dem Führungswagen 12 gekoppelt bzw. verbunden. Mit dem Bezugszeichen 14 ist eine Schmiermitteldosierungseinrichtung für eine dosierte Zufuhr von Schmiermittel aus dem Schmiermittelreservoir der Schmiermittelzufuhrvorrichtung 13 in den Führungswagen 12 gekennzeichnet.

Wie es in Fig. 1 zu erkennen ist, ist das vorzugsweise im Inneren der Schmiermittelzufuhrvorrichtung 13 befindliche Schmiermittelreservoir derart mit dem Führungswagen 12 gekoppelt, um, gemeinsam mit dem Führungswagen 12, eine lineare bzw. translatorische Bewegung entlang der Führungs- bzw. Profilschiene 11 der Linearführung 10 durchzuführen. Dazu kann die Schmiermittelzufuhrvorrichtung 13, wie in Fig. 1 dargestellt, beispielsweise in Verschiebe- bzw. Verfahrrichtung stirnseitig mit dem Führungswagen 12 gekoppelt sein.

Gemäß manchen Ausführungsbeispielen kann es sich bei der Schmiermittelzufuhrvorrichtung 13 um eine sogenannte Nachschmiereinheit handeln. Diese kann dann stirnseitig mit einem an dem Führungswagen 12 üblicherweise vorhandenen Schmierstoffreservoir 15 über eine entsprechende Kopplungseinrichtung gekoppelt bzw. verbunden sein. Dazu kann die Kopplungseinrichtung beispielsweise nicht dargestellte Verschraubungen und/oder Klemm- bzw. Schnappverbindungen aufweisen, um die Schmiermittelzufuhrvorrichtung 13 mit dem an dem Führungswagen 12 vorhandenen Schmierstoffreservoir 15 bzw. dem Führungswagen 12 selbst zu verbinden.

Handelt es sich bei der Schmiermittelzufuhrvorrichtung 13 um eine besagte stirnseitig mit dem Führungswagen 12 gekoppelte Nachschmiereinheit, so kann diese zusammen mit dem Führungswagen 12 entlang der Profilschiene 11 in Verschieberichtung linear hin und her bewegt werden. Dazu braucht die Schmiermittelzufuhrvorrichtung 13 nicht notwendigerweise eine eigene Linearwälzlagerung aufzuweisen. Vielmehr ist die Schmiermittelzufuhrvorrichtung 13 gemäß einem Ausführungsbeispiel gerade nicht selbständig wälzgelagert. Wie es in Fig. 1 zu sehen ist, kann ein Querschnitt der Schmiermittelzufuhrvorrichtung bzw. der Nachschmiereinheit 13 im Wesentlichen einem Querschnitt des Schmiermittelreservoirs 15, in dem typischerweise Wälzkörper der Wälzführung umgelenkt werden, entsprechen. D.h., die Nachschmiereinheit 13 kann einen im Wesentlichen U-förmigen bzw. bügelartigen Querschnitt aufweisen, um die Führungs- bzw. Profilschiene 11 entsprechend umgreifen zu können.

Ein Gehäuse der mit dem Führungswagen 12 gekoppelten Schmiermittelzufuhrvorrichtung 13 kann in vorteilhafter Weise z.B. aus einem Leichtmetall oder einem Kunststoff gefertigt sein, um einen aus dem Führungswagen 12 und der Nachschmiereinheit 13 ausgebildeten äußeren Führungsteil der Linearführung 10 nicht unnötig träge und ineffizient zu machen.

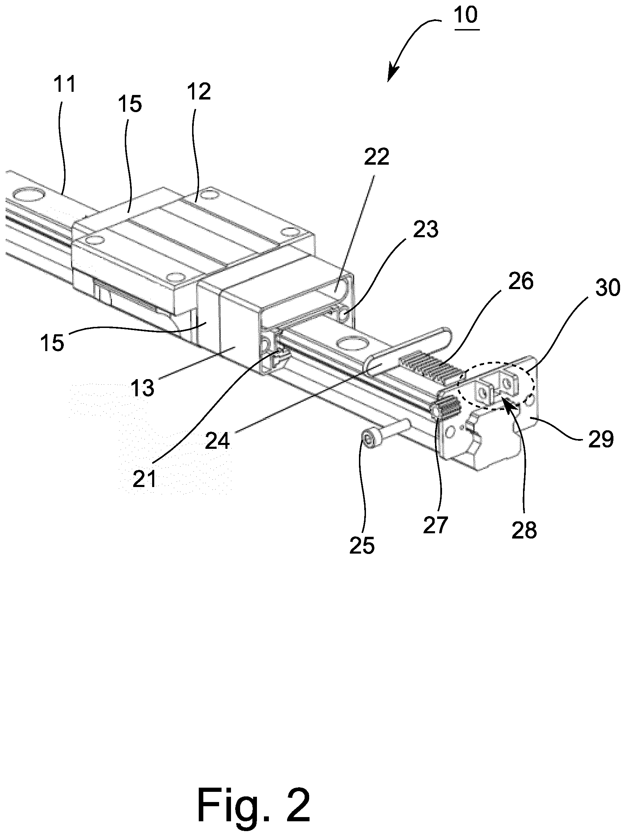

Fig. 2 zeigt in einer veränderten Ansicht die Linearführung 10 gemäß Fig. 1, wobei hier ein Aufbau der mit dem Führungswagen 12 gekoppelten Schmiermittelzufuhrvorrichtung 13 detaillierter zu erkennen ist.

In einem Innenraum der Schmiermittelzufuhrvorrichtung 13 ist ein Schmiermittelreservoir 22 zum Aufnehmen eines Schmiermittels bzw. -fetts für die in dem Führungswagen 12 umlaufenden Wälzkörper zu erkennen. Gemäß dem in Fig. 2 dargestellten Ausführungsbeispiel kann eine Kopplungseinrichtung beispielsweise links- und rechtsseitig der Profilschiene 11 angeordnete und in Verschieberichtung weisende Bohrungen 23 zum Koppeln des Schmiermittelreservoirs 22 mit dem Führungswagen 12 bzw. dessen Schmierstoffreservoir 15 aufweisen. In die Bohrungen 23 können beispielsweise Schrauben geführt werden, um den Nachschmieraufsatz 13 mit dem Schmierstoffreservoir und Umlenkbereich 15 des Führungswagens 12 stirnseitig zu verschrauben. Gemäß anderen Ausführungsbeispielen sind aber auch andere Kopplungsmechanismen, wie zum Beispiel Klemm-, Schnapp- und/oder Clipverbindungen denkbar.

Manche Ausführungsformen der Schmiermittelzufuhrvorrichtung 13 bzw. deren Schmiermittelreservoirs 22 können das üblicherweise vorhandene Schmierstoffreservoir 15 vollständig ersetzen, so dass eine derartige Schmiermittelzufuhrvorrichtung 13 auch direkt mit dem Führungswagen 12 gekoppelt werden kann, ohne dass das Schmierstoffreservoir 15 "zwischengeschaltet" werden müsste.

Gemäß der in Fig. 2 gezeigten Ausführungsform kann in dem Schmiermittelreservoir 22 ein an dessen Querschnitt angepasster Kolben 24 angeordnet und geführt sein. Zum Betätigen des Kolbens 24 kann die Schmiermitteldosierungseinrichtung 14 ein Stellglied aufweisen, um vermittels des Kolbens 24 das Schmiermittel bzw. den Schmierstoff für die in dem Führungswagen 12 geführten Wälzkörper aus dem Schmiermittelreservoir 22 in einen dafür vorgesehenen Bereich des Führungswagens 12, 15 zu drücken. Der in den Führungswagen 12 dafür vorgesehene Bereich kann dabei z. B. das Schmierstoffreservoir 15 sein.

Das Stellglied kann gemäß einem Ausführungsbeispiel eine Dosierungsschraube 25 aufweisen. Allerdings sind selbstverständlich auch andere Ausführungsformen denkbar, bei denen der Kolben 24 durch eine andere Form von Stellglied betätigt werden kann. Beispielsweise könnte der Kolben 24 auch direkt durch Ausübung eines Drucks auf den Kolben 24 bzw. dessen Kolbenstange in Verschiebe- bzw. Verfahrrichtung in dem Schmiermittelreservoir 22 verschoben werden. Bei einer automatisch gestalteten Ausführungsform kann das Stellglied auch ein Motor, insbesondere ein Elektromotor sein, der mit dem Kolben 24 zusammenwirken kann, um Schmiermittel aus dem Schmiermittelreservoir 22 zu pressen. Dabei kann der Motor beispielsweise durch eine Sensoreinrichtung gesteuert bzw. geregelt werden, welche ein direktes oder indirektes Maß für eine zwischen Wälzkörpern und Lauffläche vorhandene Schmiermittelmenge ermitteln kann, um basierend darauf ggf. den Motor der Dosierungseinrichtung 14 zu betätigen, um den in dem Schmiermittelreservoir geführten Kolben 24 zu bewegen, und somit Schmiermittel aus dem Schmiermittelreservoir 22 in Richtung Laufflächen und/oder Wälzkörper abzugeben.

Bei eine weiteren Ausführungsform kann das Stellglied auch beispielsweise abhängig von einer Laufleistung des Führungswagens 12 einen Kolbenvorschub einstellen. Die Laufleistung kann dabei sowohl mechanisch als auch elektrisch, z.B. mittels eines geeigneten Sensors erfasst werden. Dieser kann beispielsweise eine Anzahl von Wälzkörperumläufen messen. Davon abhängig kann dann der in dem Schmiermittelreservoir geführte Kolben 24 bewegt werden, um somit Schmiermittel aus dem Schmiermittelreservoir 22 in Richtung Laufflächen und/oder Wälzkörper abzugeben.

Bei dem in Fig. 2 skizzierten Ausführungsbeispiel sind der in dem Schmiermittelreservoir 22 geführte Kolben 24 und die Dosierungsschraube 25 über eine Zahnstange 26 miteinander gekoppelt. Dabei kann die Zahnstange 26 quasi eine Kolbenstange des Kolbens 24 bilden, die stirnseitig in Richtung des Schmiermittelreservoirs 22 mit einer Kolbenfläche des Kolbens 24 gekoppelt ist, wobei die Kolbenfläche einen der Form nach an den Querschnitt des Schmiermittelreservoirs 22 angepasst ist.

Um bei einer Drehung der Dosierungsschraube 25 die Zahnstange 26, und damit auch den in dem Schmiermittelreservoir 22 geführten Kolben 24, bewegen zu können, kann die Dosierungsschraube 25 mit einem Zahnrad 27 gekoppelt sein, welches in die Zahnstange 26 eingreifen kann. Das heißt, über das Zahnrad 27 ist die Dosierungsschraube 25 mit der Zahnstange 26 und dem Kolben 24 gekoppelt.

Gemäß dem hier exemplarisch dargestellten Ausführungsbeispiel kann die Zahnstange 26 durch eine Öffnung 28 in einer stirnseitigen Endplatte 29 der Schmiermittelzufuhrvorrichtung 13 geführt werden, um sie von außerhalb eines Gehäuses der Schmiermittelzufuhrvorrichtung 13 der mit dem Zahnrad 27 gekoppelten Stellschraube 25 zugänglich zu machen. Links- und rechtsseitig (relativ zur Verschieberichtung) der stirnseitigen Öffnung 28 kann eine Lagerung 30 vorgesehen sein, um die Stellschraube 25 samt dem in die Zahnstange 26 eingreifenden Zahnrad 27 zu lagern. Eine Rotationsachse der Stellschraube 25 und/oder des Zahnrads 27 verläuft dabei in horizontaler Richtung senkrecht zur Verschiebe- bzw. Verfahrrichtung der Linearführung 10, so dass durch Drehung der Schraube 25 bzw. des Zahnrads 27 eine Bewegung der Zahnstange 26 bzw. des Kolbens 24 in Verschiebe bzw. Verfahrrichtung der Linearführung 10 erreicht werden kann.

In Fig. 2 sind in der Schmiermittelzufuhrvorrichtung bzw. dem Nachschmieraufsatz 13 auch links- und rechtsseitig der Führungsschiene 11 angeordnete Führungen 21 gezeigt, in die beispielsweise vorteilhaft zusätzliche Dichtungen angebracht werden können, um das Linearsystem 10 bzw. den Führungswagen 12, 15, 13 zusätzlich zu der Profilschiene 11 hin abzudichten.

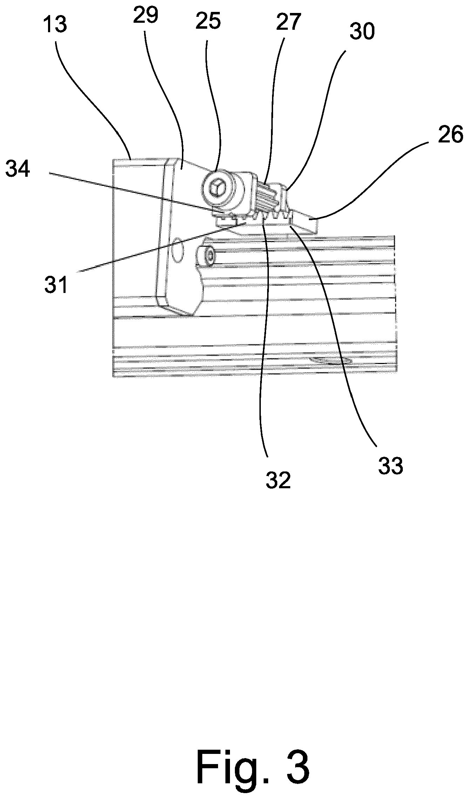

Fig. 3 zeigt in einer vergrößerten Darstellung eine Seitenansicht eines stirnseitigen Endbereichs einer Schmiermittelzufuhrvorrichtung 13 gemäß einem Ausführungsbeispiel.

Gemäß der Fig. 3 können an der Schmiermittelzufuhrvorrichtung 13 Markierungen 31, 32, 33, 34 vorgesehen sein, um einem Nutzer der Schmiermittelzufuhrvorrichtung 13 eine Zufuhr einer vorbestimmten Schmiermittelmenge zum Führungswagen 12, 15 hin bzw. einen Austritt der vorbestimmten Schmiermittelmenge aus dem Schmiermittelreservoir 22 anzuzeigen. Dabei können Markierungen 31, 32, 33 wie in Fig. 3 gezeigt, beispielsweise an (einer Seite) der Zahnstange 26 angebracht sein, um einem Nutzer anzeigen zu können, wie weit er die Stellschraube 25 entsprechend einer vorbestimmten Nachschmierung in eine Richtung drehen muss. Zusätzlich oder alternativ kann eine Markierung 34 an dem Gehäuse, insbesondere der Lagerung 30, angebracht sein, um vorteilhaft für eine Positionserkennung mit den Markierungen 31, 32, 33 zusammenwirken zu können. In dem in Fig. 3 gezeigten Ausführungsbeispiel könnte die erste Markierung 31 beispielsweise einer Stellung von Zahnrad 27 zu Zahnstange 26 für ein erstes Nachschmierintervall entsprechen, wohingegen die zweite Markierung 32 einem zweiten, darauffolgenden Nachschmierintervall entsprechen kann. Eine dritte bzw. letzte Markierung 33 kann dementsprechend dem Nutzer ein drittes, oder u. U. finales Nachschmierintervall anzeigen.

Zusammenfassend kann eine Schmiermittelzufuhrvorrichtung gemäß Ausführungsbeispielen der vorliegenden Erfindung also beispielsweise eine einem Profilschienenwagen vormontierte Nachschmiereinheit 13 mit einer Fettfüllung bedeuten. Durch Verdrehen einer Dosierschraube 25 kann vermittels einer damit gekoppelten Zahnstange 26 und einem Kolbensystem 24 ein Fettvolumen in den Profilschienenwagen 12, 15 gedrückt werden. Markierungen 31, 32, 33 und 34 an der Zahnstange 26 bzw. einem Gehäuse der Schmiermittelzufuhrvorrichtung können so angebracht sein, dass damit die vorbestimmte Fettmenge dosiert werden kann. Je nach Ausführungsform können so beispielsweise 3 bis 5, oder auch mehr Nachschmierintervalle realisiert werden, was in der Regel für eine gesamte Gebrauchsdauer einer Linearführung ausreichend ist.

### Bezugszeichenliste

- 10: Linearführung
- 11: Führungs- bzw. Profilschiene
- 12: Führungswagen
- 13: Schmiermittelzufuhrvorrichtung, Nachschmiereinheit
- 14: Dosierungseinrichtung
- 15: Schmierstoffreservoir, Umlenkbereich
- 21: Dichtungsführung
- 22: Schmiermittelreservoir der Schmiermittelzufuhrvorrichtung
- 23: Kopplungseinrichtung, Bohrungen
- 24: im Schmiermittelreservoir geführter Kolben
- 25: Dosierungsschraube
- 26: Zahnstange
- 27: Zahnrad
- 28: stirnseitige Öffnung für Zahnstange
- 29: Endplatte der Schmiermittelzufuhrvorrichtung
- 30: Lager für Zahnrad, Dosierungsschraube
- 31: erste Markierung
- 32: zweite Markierung
- 33: dritte Markierung

## Patentansprüche

1. Eine Schmiermittelzufuhrvorrichtung (13) für einen Führungswagen (12; 15) einer Linearführung (10), mit folgenden Merkmalen:
einem Schmiermittelreservoir (22) zum Aufnehmen eines Schmiermittels für den Führungswagen (12; 15) und mit einem in dem Schmiermittelreservoir (22) geführten Kolben (24);
einer Kopplungseinrichtung (23) zum Koppeln des Schmiermittelreservoirs (22) mit dem Führungswagen (12; 15), so dass das Schmiermittelreservoir (22) gemeinsam mit dem Führungswagen (12; 15) eine translatorische Bewegung entlang einer Führungsschiene (11) der Linearführung (10) durchführt; und
einer Schmiermitteldosierungseinrichtung (14) zur dosierten Zufuhr von Schmiermittel aus dem Schmiermittelreservoir (22) in den Führungswagen (12; 15), wobei die Schmiermitteldosierungseinrichtung (14) ein mit dem in dem Schmiermittelreservoir (22) geführten Kolben (24) über eine Zahnstange (26) gekoppeltes Stellglied (25) zum Betätigen des in dem Schmiermittelreservoir (22) geführten Kolbens (24) aufweist, um vermittels des Kolbens (24) ein Schmiermittel für Wälzkörper des Führungswagens (12; 15) aus dem Schmiermittelreservoir (22) in einen dafür vorgesehenen Bereich des Führungswagens (12; 15) zu drücken.

2. Die Schmiermittelzufuhrvorrichtung (13) nach Anspruch 1, wobei sich das Schmiermittelreservoir (22) in einem äußeren Führungsteil der Schmiermittelzufuhrvorrichtung (13) befindet, welches ausgebildet ist, um eine Führungsschiene (11) der Linearführung (10) bügelartig zu umgreifen.

3. Die Schmiermittelzufuhrvorrichtung (13) nach Anspruch 1 oder 2, wobei das Stellglied (25) mit einem Zahnrad (27) gekoppelt ist, welches in die Zahnstange (26) eingreift, um bei einer Betätigung des Stellglieds (25) die Zahnstange (26) und damit den in dem Schmiermittelreservoir (22) geführten Kolben (24) zu bewegen.

4. Die Schmiermittelzufuhrvorrichtung (13) nach einem der vorhergehenden Ansprüche, an der wenigstens eine Markierung (31; 32; 33) vorgesehen ist, um einem Nutzer eine Zufuhr einer vorbestimmten Schmiermittelmenge anzuzeigen.

5. Die Schmiermittelzufuhrvorrichtung (13) nach einem der vorhergehenden Ansprüche, wobei das Stellglied eine Dosierungsschraube (25) aufweist, um bei einem Drehen der Dosierungsschraube (25) die Zahnstange (26) und den in dem Schmiermittelreservoir (22) geführten Kolben (24) zu bewegen.

6. Eine Linearführung (10) mit einer Führungsschiene (11), einem Führungswagen (12; 15) und einer Schmiermittelzufuhrvorrichtung (13) gemäß einem der vorhergehenden Ansprüche.

7. Ein Verfahren zum Zuführen von Schmiermittel für einen Führungswagen (12; 15) einer Linearführung (10), mit folgenden Schritten:
Bereitstellen eines Schmiermittelreservoirs (22) zum Aufnehmen eines Schmiermittels für den Führungswagen (12; 15) mit einem in dem Schmiermittelreservoir (22) geführten Kolben (24);
Koppeln des Schmiermittelreservoirs (22) mit dem Führungswagen(12; 15), so dass das Schmiermittelreservoir (22) gemeinsam mit dem Führungswagen (12; 15) eine translatorische Bewegung entlang einer Führungsschiene (11) der Linearführung (10) durchführt; und
Dosierung einer Zufuhr von Schmiermittel aus dem Schmiermittelreservoir (22) in den Führungswagen (12; 15) mittels einer dafür vorgesehenen Schmiermitteldosierungseinrichtung (14), die ein mit dem in dem Schmiermittelreservoir (22) geführten Kolben (24) über eine Zahnstange (26) gekoppeltes Stellglied (25) zum Betätigen des in dem Schmiermittelreservoir (22) geführten Kolbens (24) aufweist, um vermittels des Kolbens (24) ein Schmiermittel für Wälzkörper des Führungswagens (12; 15) aus dem Schmiermittelreservoir (22) in einen dafür vorgesehenen Bereich des Führungswagens (12; 15) zu drücken.

## Claims

1. Lubricant feed apparatus (13) for a guide carriage (12; 15) of a linear guide (10), having the following features:
a lubricant reservoir (22) for receiving a lubricant for the guide carriage (12; 15) and with a plunger (24) which is guided in the lubricant reservoir (22);
a coupling device (23) for coupling the lubricant reservoir (22) to the guide carriage (12; 15), with the result that, together with the guide carriage (12; 15), the lubricant reservoir (22) carries out a translational movement along a guide rail (11) of the linear guide (10); and
a lubricant metering device (14) for the metered supply of lubricant out of the lubricant reservoir (22) into the guide carriage (12; 15), the lubricant metering device (14) having an actuator (25) for actuating the plunger (24) which is guided in the lubricant reservoir (22), which actuator (25) is coupled via a rack (26) to the plunger (24) which is guided in the lubricant reservoir (22), in order to press a lubricant for rolling bodies of the guide carriage (12; 15) by means of the plunger (24) out of the lubricant reservoir (22) into a region of the guide carriage (12; 15) which is provided for this purpose.

2. Lubricant feed apparatus (13) according to Claim 1, the lubricant reservoir (22) being located in an outer guide part of the lubricant feed apparatus (13), which outer guide part is configured to engage around a guide rail (11) of the linear guide (10) in a bracket-like manner.

3. Lubricant feed apparatus (13) according to Claim 1 or 2, the actuator (25) being coupled to a gearwheel (27) which engages into the rack (26), in order to move the rack (26) and therefore the plunger (24) which is guided in the lubricant reservoir (22) in the case of an actuation of the actuator (25).

4. Lubricant feed apparatus (13) according to one of the preceding claims, on which at least one marking (31; 32; 33) is provided, in order to indicate a supply of a predefined lubricant quantity to a user.

5. Lubricant feed apparatus (13) according to one of the preceding claims, the actuator having a metering screw (25), in order to move the rack (26) and the plunger (24) which is guided in the lubricant reservoir (22) in the case of a rotation of the metering screw (25).

6. Linear guide (10) having a guide rail (11), a guide carriage (12; 15) and a lubricant feed apparatus (13) according to one of the preceding claims.

7. Method for supplying lubricant for a guide carriage (12; 15) of a linear guide (10), having the following steps:
provision of a lubricant reservoir (22) for receiving a lubricant for the guide carriage (12; 15) with a plunger (24) which is guided in the lubricant reservoir (22);
coupling of the lubricant reservoir (22) to the guide carriage (12; 15), with the result that, together with the guide carriage (12; 15), the lubricant reservoir (22) carries out a translational movement along a guide rail (11) of the linear guide (10); and
metering of a supply of lubricant out of the lubricant reservoir (22) into the guide carriage (12; 15) by means of a lubricant metering device (14) which is provided for this purpose and has an actuator (25) for actuating the plunger (24) which is guided in the lubricant reservoir (22), which actuator (25) is coupled via a rack (26) to the plunger (24) which is guided in the lubricant reservoir (22), in order to press a lubricant for rolling bodies of the guide carriage (12; 15) by means of the plunger (24) out of the lubricant reservoir (22) into a region of the guide carriage (12; 15) which is provided for this purpose.

## Revendications

1. Dispositif pour l'acheminement de lubrifiant (13) pour un chariot de guidage (12 ; 15) d'un guide linéaire (10), comprenant les caractéristiques suivantes :
un réservoir de lubrifiant (22) pour recevoir un lubrifiant pour le chariot de guidage (12 ; 15) et avec un piston (24) guidé dans le réservoir de lubrifiant (22) ;
un dispositif d'accouplement (23) pour accoupler le réservoir de lubrifiant (22) au chariot de guidage (12 ; 15), de telle sorte que le réservoir de lubrifiant (22) effectue conjointement avec le chariot de guidage (12 ; 15) un mouvement de translation le long d'un rail de guidage (11) du guide linéaire (10) ; et
un dispositif de dosage de lubrifiant (14) pour l'acheminement de manière dosée de lubrifiant depuis le réservoir de lubrifiant (22) dans le chariot de guidage (12 ; 15), le dispositif de dosage de lubrifiant (14) présentant un organe de commande (25) accouplé par le biais d'une crémaillère (26) au piston (24) guidé dans le réservoir de lubrifiant (22) pour actionner le piston (24) guidé dans le réservoir de lubrifiant (22) et pour pousser, au moyen du piston (24), un lubrifiant pour des corps de roulement du chariot de guidage (12 ; 15) hors du réservoir de lubrifiant (22) dans une région du chariot de guidage (12 ; 15) prévue à cet effet.

2. Dispositif pour l'acheminement de lubrifiant (13) selon la revendication 1, dans lequel le réservoir de lubrifiant (22) se trouve dans une partie de guidage extérieure du dispositif pour l'acheminement de lubrifiant (13) qui est réalisée de manière à saisir le pourtour d'un rail de guidage (11) du guide linéaire (10) à la manière d'un étrier.

3. Dispositif pour l'acheminement de lubrifiant (13) selon la revendication 1 ou 2, dans lequel l'organe de commande (25) est accouplé à une roue dentée (27) qui vient en prise dans la crémaillère (26) afin de déplacer, lors d'un actionnement de l'organe de commande (25), la crémaillère (26) et par conséquent le piston (24) guidé dans le réservoir de lubrifiant (22).

4. Dispositif pour l'acheminement de lubrifiant (13) selon l'une quelconque des revendications précédentes, au niveau duquel est prévu au moins un marquage (31 ; 32 ; 33) afin d'indiquer à un utilisateur un acheminement d'une quantité prédéterminée de lubrifiant.

5. Dispositif pour l'acheminement de lubrifiant (13) selon l'une quelconque des revendications précédentes, dans lequel l'organe de commande présente une vis de dosage (25) afin de déplacer, lors d'une rotation de la vis de dosage (25), la crémaillère (26) et le piston (24) guidé dans le réservoir de lubrifiant (22).

6. Guide linéaire (10) comprenant un rail de guidage (11), un chariot de guidage (12 ; 15) et un dispositif pour l'acheminement de lubrifiant (13) selon l'une quelconque des revendications précédentes.

7. Procédé pour l'acheminement de lubrifiant pour un chariot de guidage (12 ; 15) d'un guide linéaire (10), comprenant les étapes suivantes :
fourniture d'un réservoir de lubrifiant (22) pour recevoir un lubrifiant pour le chariot de guidage (12 ; 15) avec un piston (24) guidé dans le réservoir de lubrifiant (22) ;
accouplement du réservoir de lubrifiant (22) au chariot de guidage (12 ; 15), de sorte que le réservoir de lubrifiant (22) effectue conjointement avec le chariot de guidage (12 ; 15) un mouvement de translation le long d'un rail de guidage (11) du guide linéaire (10) ; et
dosage d'un acheminement de lubrifiant à partir du réservoir de lubrifiant (22) dans le chariot de guidage (12 ; 15) au moyen d'un dispositif de dosage de lubrifiant (14) prévu à cet effet qui présente un organe de commande (25) accouplé au piston (24) guidé dans le réservoir de lubrifiant (22) par le biais d'une crémaillère (26) pour actionner le piston (24) guidé dans le réservoir de lubrifiant (22), et pour pousser, au moyen du piston (24), un lubrifiant pour des corps de roulement du chariot de guidage (12 ; 15) hors du réservoir de lubrifiant (22) dans une région du chariot de guidage (12 ; 15) prévue à cet effet.
